# EUROPEAN PATENT APPLICATION

(11) **EP 4 140 970 A1**
(43) Date of publication of application: **01.03.2023**
(21) Application number: 21382783.5
(22) Date of filing: 26.08.2021
(51) Int. Cl.: C04B 41/53

(54) **A LIGHT ASSISTED PROCESS FOR DISSOLVING CRYSTALIZED CALCIUM CARBONATES PRESENT IN CULTURAL HERITAGE ARTWORKS**

(71) Applicant: Consejo Superior de Investigaciones Científicas (CSIC), 28006 Madrid (ES); Universita di Bologna, 40126 Bologna (IT)
(72) Inventor: GARCIA RUIZ, Juan Manuel, 18100 Armilla (Granada) (ES); MONTALTI, Marco, 40126 Bologna (IT); MENICHETTI, Arianna, 40126 Bologna (IT)
(74) Representative: Pons

(57) **Abstract**

The invention relates to a process for dissolving crystalized carbonates present in Cultural Heritage Artworks comprising a step of mixing a solution comprising a photoacid generator or a mixture of a photoacid generator and a sensitizer with the crystalized calcium carbonate present in a cultural heritage artwork and a step of irradiating with light of wavelengths at which the photoacid generator or the sensitizer absorbs said light. Therefore, the present invention is of interest in the areas of restoration of cultural heritage artworks.

## Description

The invention relates to a process for dissolving crystalized calcium carbonates present in Cultural Heritage Artworks comprising a step of mixing a solution comprising a photoacid generator or a mixture of a photoacid generator and a sensitizer with the crystalized calcium carbonate present in a cultural heritage artwork and a step of irradiating with light of wavelengths at which the photoacid generator or the sensitizer absorbs said light.

Therefore, the present invention is of interest in the areas of restoration of Cultural Heritage Artworks.

### BACKGROUND ART

Artworks are constantly subjected to deterioration that is mainly due to instability of the materials, water soluble salts, humidity and temperature conditions, atmospheric pollutants and biological action. Unwanted formation of CaCO₃ can occur, which contributes to artwork deterioration.

Removal of CaCO₃ present on artworks is usually possible by the use of solvents or solvent blends, which are not selective and often toxic methods (Chelazzi D. et al, Angew. Chem. Int. Ed., 57 (25), 7296-7303).

In most cases, the precipitation of lime is a result of contamination, basically by the interaction of CO₂ with condensation of water that contain metals. As a consequence, the precipitation of metal carbonate typically occurs in very tiny spots.

Therefore, it is needed to develop new processes for precise removal of the calcium carbonates present in Cultural Heritage Artworks, hence avoiding deterioration of the surrounding areas of the artworks,

### SUMMARY OF THE INVENTION

Calcium carbonate dissolution is favoured at pH<4 (Morse J.W. et al, Earth Sci. Rew. 2002, 58 (1-2), 51-84), so it is necessary to achieve a lower pH value in the medium in order to efficiently dissolve CaCO₃. In the present invention, the crystalized calcium carbonate present in a cultural heritage artwork is dissolved by mixing a photoacid generator or a mixture or a photoacid generator and a sensitizer with the crystalized calcium carbonate present in a cultural heritage artwork and irradiating by means of a light source emitting light of wavelengths at which the photoacid generator or the sensitizer absorbs said light. Exploiting CaCO₃ dissolution by a controlled decrease of pH is a more precise and safe cleaning process.

Therefore, the first aspect of the invention refers to a light assisted process for dissolving crystalized calcium carbonates present in Cultural Heritage Artworks, characterized in that it comprises the following steps:
a) mixing
   ∘ a solution comprising
      - a photoacid generator absorbing light of wavelengths between 200 nm and 400 nm,
      - or a mixture of a photoacid generator and a sensitizer, wherein the sensitizer absorbs light of wavelengths between 200 nm and 700 nm,
   ∘ and the crystalized calcium carbonate present in a cultural heritage artwork,
b) irradiating, during a period of time ranging between 5 min and 15 min, the product obtained in step (a) directly by means of a light source emitting light of wavelengths
at which the photoacid generator or the sensitizer absorbs said light, thereby achieving a pH lower than 4 and the dissolution of the crystalized calcium carbonate present in cultural heritage artworks.

The term "Cultural Heritage Artwork" refers herein to artifacts such as paintings, frescoes, drawings, prints, mosaics, sculptures, historical monuments and buildings, as well as archaeological sites. In the present invention the "Cultural Heritage Artwork" comprises crystalized calcium carbonates (CaCO₃ crystals, calcite).

The term "photoacid generator" refers herein to molecules which become more acidic upon absorption of light and cause a photodissociation to produce a strong acid, therefore the irradiation of step (b) is performed by means of a light source emitting light of wavelengths at which the photoacid generator absorbs said light.

Preferably the photoacid generator is selected from
- diarylhalonium salts absorbing light of wavelengths between 200 nm and 400 nm,
- aryldiazonium salts absorbing light of wavelengths between 200 nm and 400 nm,
- triarylsulfonium salts absorbing light of wavelengths between 200 nm and 400 nm,
- arylsulfonate esters absorbing light of wavelengths between 200 nm and 400 nm,
- iminosulfonates absorbing light of wavelengths between 200 nm and 400 nm,
- imidosulfonates absorbing light of wavelengths between 200 nm and 400 nm,
- (trichloromethyl)-1.3.5-triazines absorbing light of wavelengths between 200 nm and 400 nm,
- or mixtures thereof.

In the process of the present invention a solution comprising a photoacid generator and the crystalized calcium carbonate present in the Cultural Heritage artwork are mixed in step (a) and the product obtained in step (a) is irradiated in step (b) directly by means of a light source emitting light of wavelengths at which the photoacid generator absorbs said light and an irradiance ranging between 10⁷ W·m⁻² and 10⁸ W·m⁻², thereby achieving a pH lower than 4 and the dissolution of the crystalized calcium carbonate present in a cultural heritage artwork.

The term "irradiance" refers herein to the radiant flux of the light source (power-W) per unit of the area hit by the light (square meter - m²).

The term "sensitizer" refers herein to molecules that react with a photoacid generator upon absorption of light and cause the activation of the photoacid generator by a photoinduced electron or energy transfer. Once the sensitizer is excited upon irradiation, it can react with the photoacid generator by transferring its energy, so that the sensitizerwill return to the ground state and the photoacid generator will be excited resulting in a strong acid, therefore the irradiation of step (b) is performed by means of a light source emitting light of wavelengths at which the sensitizer absorbs said light.

Preferably, the sensitizer is selected from
- xanthene or xanthene derivatives absorbing light of wavelengths between 200 nm and 700 nm,
- pyrene or pyrene derivatives absorbing light of wavelengths between 200 nm and 700 nm,
- anthraquinone or anthraquinone derivatives absorbing light of wavelengths between 200 nm and 700 nm,
- ketocoumarin or ketocoumarin derivatives absorbing light of wavelengths between 200 nm and 700 nm,
- camphorquinone or camphorquinone derivatives absorbing light of wavelengths between 200 nm and 700 nm,
- fluorenone absorbing light of wavelengths between 200 nm and 700 nm,
- or tris (2,2'.-bipyridine) ruthenium (II) absorbing light of wavelengths between 200 nm and 700 nm.

Therefore, alternatively, in the process of the present invention a solution comprising a mixture of a photoacid generator and a sensitizer and the crystalized calcium carbonate present in the Cultural Heritage artwork are mixed in step (a) and the product obtained in step (a) is irradiated in step (b) directly by means of a light source emitting light of wavelengths at which the sensitizer absorbs said light and an irradiance ranging between 10⁵ W·m⁻² and 10⁸ W·m⁻², thereby activating the photoacid generator and consequently achieving a pH lower than 4 and the dissolution of the crystalized calcium carbonate present in a cultural heritage artwork.

Using a mixture of a photoacid generator and a sensitizer is a significative improvement of the whole method because it allows to extend the wavelength range of irradiation, permitting the use of Visible light (400 nm- 700 nm). Furthermore, also the irradiation time decreases.

The irradiation of step (b) of the process of the present invention is preferably performed by means of a continuous light source selected from an incandescent lamp, a gas discharge lamp or a light emitting diode lamps.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples and drawings are provided by way of illustration and are not intended to be limiting of the present invention.

### BRIEF DESCRIPTION OF THE DRAWINGS

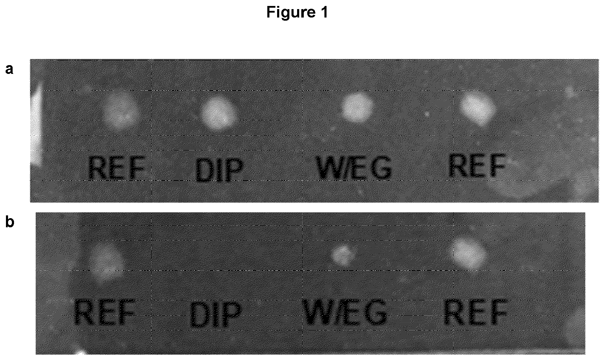

**Figure 1****.** Effect on CaCO₃ spot dissolution of DIP in water/ethylene glycol.
   a. Before irradiation:
      DIP: CaCO₃ spot covered by a water/ethylene glycol solution of Diphenyliodonium hexafluorophosphate (photoacid)
      W/EG: CaCO₃ spot covered by a water/ethylene glycol mixture REF: CaCO₃ spot not covered by any solution
   b. After irradiation and washing with MilliQ water (15 minutes):
      DIP: CaCO₃ spot covered by a water/ethylene glycol solution of Diphenyliodonium hexafluorophosphate (photoacid) completely dissolved after irradiation
      W/EG: CaCO₃ spot covered by a water/ethylene glycol mixture; no dissolution of calcium carbonate occurs, but just a partial removal after the washing step. REF: CaCO₃ spot not covered by any solution
**Figure 2****.** Irradiation setup with fluorescence microscope.
   1. LED source
   2. Specimen
   3. Objectives
   4. Excitation light
   5. Excitation filter (not used)
   6. Dichromatic mirror
   7. Emission filter
   8. Fluorescence light for observation
   9. Tungsten lamp for backscattering viewing
**Figure 3****.** Monitorization of the dissolution of CaCO₃ in the presence of a mixture of a DIP and a Thioxanthene-9-one solution during irradiation at 365 nm.
**Figure 4****.** Monitorization of the dissolution of CaCO₃ in the presence of a mixture of a DIP and a Thioxanthene-9-one solution during irradiation at 395 nm.
**Figure 5****.** Dissolution of CaCO₃ in the presence of a mixture of a DIP and a Thioxanthene-9-one solution during irradiation at 365 nm by means of a torch (light beam of 4 mm of diameter).
   1. Ca(OH)₂ deposited on the glass slide and left in air to form CaCO₃
   2. deposition with DIP 20 mM and THX 0.5 mM (water/ethanol/ethylen glycol 1:1:2) on top
   3. irradiation procedure (5 minutes)
   4. spot after irradiation, washed with MilliQ water and dried in air

### Examples

### Example 1: Photodissolution tests of CaCO₃ in solution using Diphenyliodonium hexafluorophosphate (DIP) as photoacid generator

Diphenyliodonium hexafluorophosphate (DIP) purchased by Sigma Aldrich was used as a photoacid generator. DIP was dissolved in a water/ethanol mixture 1:1 to obtain DIP concentrations of 0.02M.

Then CaCO₃ powder (Sigma Aldrich) was added to the solution to have a concentration of 0.005 M.

Irradiation was performed on 4mL vials (Ø 15mm×45mm) filled respectively with 3 mL of DPI solution 0.02M in H₂O/EtOH 1:1. 1.5 mg of CaCO₃ were added to have a CaCO₃ concentration of 0.005 M.

The LED was placed horizontally, at 3 cm from the vial. This distance corresponds to an irradiance of 36700 W·m⁻² on a light spot with 1,1 cm of diameter, measured considering an angular displacement of 20°. The irradiation was performed for two hours, after which the CaCO₃ powder added at the beginning disappeared completely.

### Example 2: Photodissolution tests of a CaCO₃ spot using Diphenyliodonium hexafluorophosphate (DIP) as photoacid generator

2µL of CaCO₃ 2 mg/mL aqueous dispersion was placed on a glass slide and left drying for 1 hour. Then, 10 µL of DIP solution 40 mM in water/ethylene glycol 40:60 was placed on the dried spot.

The side of the glass slide on which the CaCO₃ and the photoacid generator solution was placed was irradiated under the LED at 365 nm (distance of 2 cm) and irradiated for 15 minutes. This distance corresponds to an irradiance of 32200 W·m⁻² on a light spot of 0.7 cm of diameter, measured considering an angular displacement of 20°. After irradiation, the glass slide was washed with MilliQ water.

Fig. 1 shows CaCO₃ spots deposited on a glass slide a) before and b) after irradiation and washing. "DIP" and "W/EG" CaCO₃ spots are covered respectively with 10µL of DIP 0.04M solution in water/ethylene glycol 40:60 and with 10 µL of water/ethylene glycol 40:60. The two REF spots (CaCO₃ spots) are not covered by any solution during the irradiation and aren't washed after irradiation.

As it can be observed in Fig. 1 complete calcium carbonate dissolution is obtained after irradiation.

### Example 3: Photodissolution tests on a CaCO₃ spot using a mixture of a photoacid generator and a sensitizer

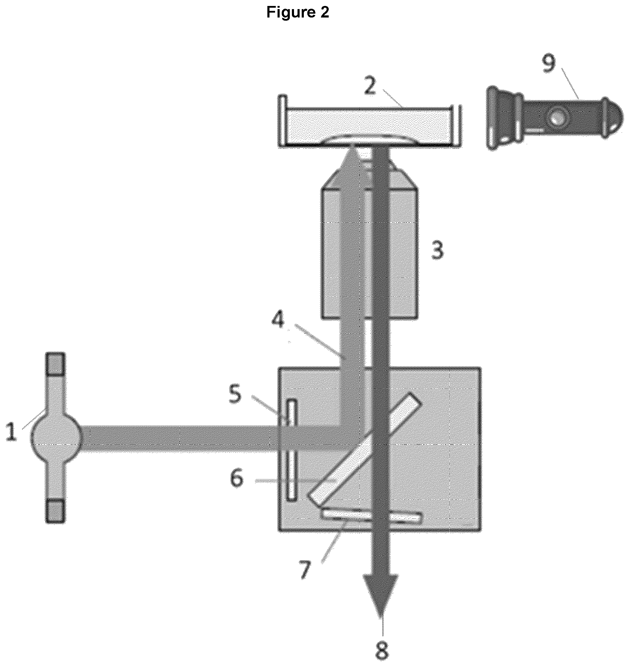

The irradiation was performed in a fluorescence microscope (Olympus IX71) with a LED at 365 nm and a LED at 395 nm. Images were collected during irradiation by means of a camera (CMOS camera - Imaging Source DFK23UP031, sensor MT9P031, 2592x1944 pixels) (Figure 2).

The LED source was placed in correspondence to the light source of the fluorescence microscope and no filter in excitation was set up. Irradiation was performed with a 10x objective. Images were collected with a camera during irradiation every minute. In particular, the irradiation was stopped every minute and the image was collected in backscattering by illuminating one side of the sample with a tungsten lamp, to see the calcite crystals, not clearly observable with the microscope transmission or fluorescence mode.

10µL of calcite crystals 2 mg/mL aqueous dispersion sonicated for 10 minutes was placed on a glass slide and left drying for 2-3 hours. Then, 10 µL of DIP solution 20 mM and Thioxanthene-9-one 0,5 mM in water:ethanol:ethylene glycol 1:1:2 were placed on the dried spot.

Then irradiation was performed by a fluorescence microscope adapted for irradiation. In particular, the side of the glass slide, on which the CaCO₃ and the solution comprising the photoacid generator and the sensitizer were placed, was irradiated by a 365 nm and by a 395 nm LED (irradiance 10⁷-10⁸ W·m⁻²) focused by the microscope lens. After irradiation, the glass slide was washed with MilliQ water.

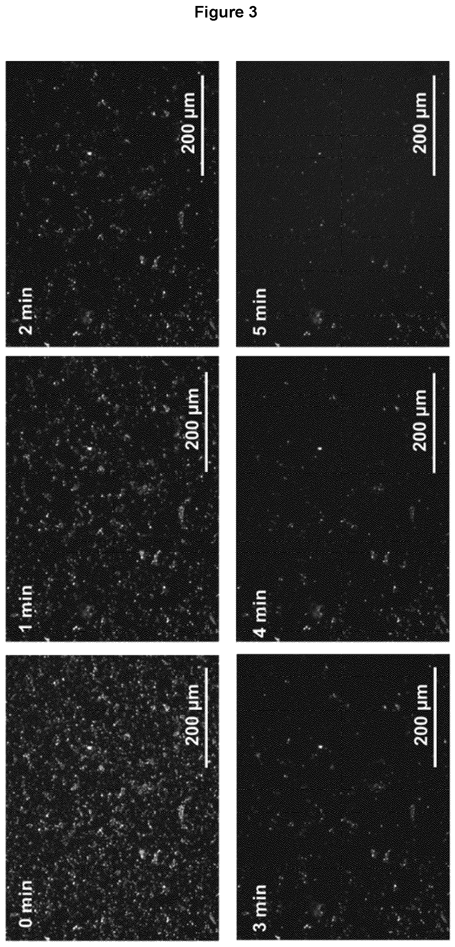

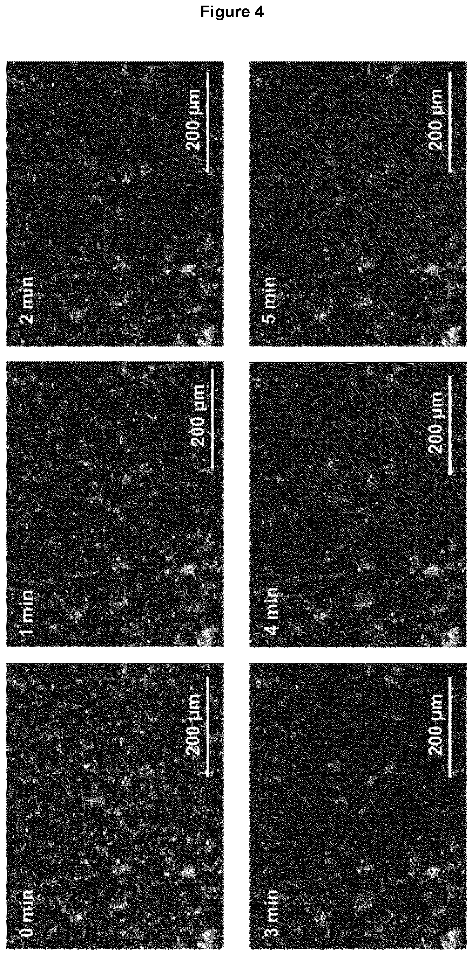

CaCO₃ was almost completely dissolved after 5 minutes of irradiation at 365 nm and 395 nm wavelengths (Figure 3 and 4, respectively).

### Example 4: Photodissolution tests on a CaCO₃ spot using a mixture of a photoacid generator and a sensitizer and irradiating with a macroscopic beam light

The irradiation was performed by means of a LED torch at 365 nm (Alonefire SV003) setup with two 50 mm lenses, in order to have a beam light of 4mm of diameter on the surface of the sample. The irradiation was performed for 5 minutes.

Ca(OH)₂ 2 mg/mL aqueous dispersion sonicated for 10 minutes was placed on a glass slide and left drying for one day. Then, 10 µL of DIP solution 20 mM and Thioxanthene-9-one 0,5 mM in water:ethanol:ethylene glycol 1:1:2 was placed over all of the layer of CaCO₃.

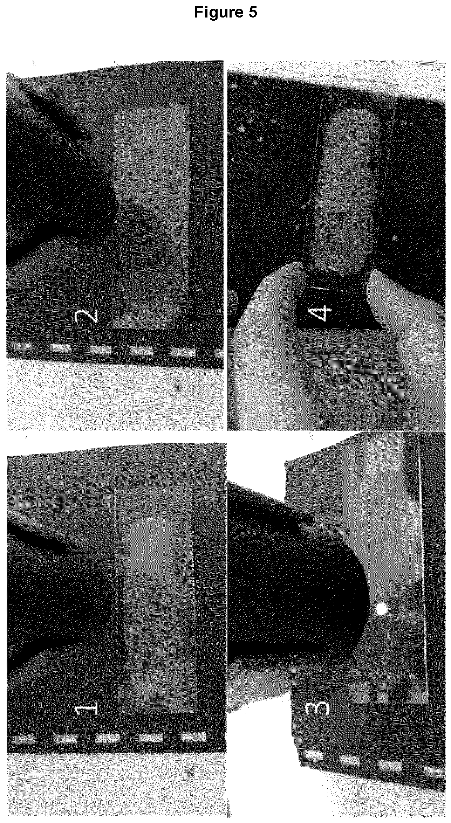

Then irradiation was performed by the torch placed above the sample. In particular, the side of the glass slide, on which the CaCO₃ and the solution comprising the photoacid generator and the sensitizer were placed, was irradiated by a 365 nm LED torch (irradiance 10⁵-10⁶ W·m⁻²) focused by two 50 mm lenses. After irradiation, the glass slide was washed with MilliQ water and dried in air (Figure 5).

## Claims

1. A light assisted process for dissolving crystalized calcium carbonates present in cultural heritage artworks, **characterized in that** it comprises the following steps:
a) mixing
∘ a solution comprising
• a photoacid generator absorbing light of wavelengths between 200 nm and 400 nm,
• or a mixture of a photoacid generator and a sensitizer, wherein the sensitizer absorbs light of wavelengths between 200 nm and 700 nm,
∘ and the crystalized calcium carbonate present in a cultural heritage artwork,
b) irradiating, during a period of time ranging between 5 min and 15 min, the product obtained in step (a) directly by means of a light source emitting light of wavelengths at which the photoacid generator or the sensitizer absorbs said light, thereby achieving a pH lower than 4 and the dissolution of the crystalized calcium carbonate present in cultural heritage artworks.

2. The process according to claim 1, wherein the photoacid generator is selected from
• diarylhalonium salts absorbing light of wavelengths between 200 nm and 400 nm,
• aryldiazonium salts absorbing light of wavelengths between 200 nm and 400 nm,
• triarylsulfonium salts absorbing light of wavelengths between 200 nm and 400 nm,
• arylsulfonate esters absorbing light of wavelengths between 200 nm and 400 nm,
• iminosulfonates absorbing light of wavelengths between 200 nm and 400 nm,
• imidosulfonates absorbing light of wavelengths between 200 nm and 400 nm,
• (trichloromethyl)-1.3.5-triazines absorbing light of wavelengths between 200 nm and 400 nm,
• or mixtures thereof.

3. The process according to any of claims 1 or 2, wherein the sensitizer is selected from
• xanthene or xanthene derivatives absorbing light of wavelengths between 200 nm and 700 nm,
• pyrene or pyrene derivatives absorbing light of wavelengths between 200 nm and 700 nm,
• anthraquinone or anthraquinone derivatives absorbing light of wavelengths between 200 nm and 700 nm,
• ketocoumarin or ketocoumarin derivatives absorbing light of wavelengths between 200 nm and 700 nm,
• camphorquinone or camphorquinone derivatives absorbing light of wavelengths between 200 nm and 700 nm,
• fluorenone absorbing light of wavelengths between 200 nm and 700 nm,
• or tris (2,2'.-bipyridine) ruthenium (II) absorbing light of wavelengths between 200 nm and 700 nm.

4. The process according to any of claims 1 to 3, wherein the irradiation of step (b) is performed by means of a light source emitting light of wavelengths at which the photoacid generator absorbs said light and an irradiance ranging between 10⁷ W·m⁻² and 10⁸ W·m⁻².

5. The process according to any of claims 1 to 3, wherein the irradiation of step (b) is performed by means of a light source emitting light of wavelengths at which the sensitizer absorbs said light and an irradiance ranging between 10⁵ W·m⁻² and 10⁸ W·m⁻².

6. The process according to any of claims 1 to 5, wherein the irradiation of step (b) is performed by means of a continuous light source selected from an incandescent lamp, a gas discharge lamp or a light emitting diode lamps.
